# EUROPEAN PATENT SPECIFICATION

(11) **EP 1 949 013 B1**
(45) Date of publication and mention of the grant of the patent: **30.05.2012**
(21) Application number: 07713471.6
(22) Date of filing: 26.02.2007
(51) Int. Cl.: F28F 9/26, F16J 15/06

(54) **NIPPLE FOR RADIATOR ELEMENTS, RELATIVE RADIATOR ELEMENTS AND SET OF RADIATOR ELEMENTS**
NIPPEL FÜR HEIZUNGSELEMENTE, ENTSPRECHENDE HEIZUNGSELEMENTE UND SATZ VON HEIZUNGSELEMENTEN
RACCORD POUR ELEMENTS DE RADIATEUR, ELEMENTS DE RADIATEUR RELATIFS ET JEUX D'ELEMENTS DE RADIATEUR

(30) Priority: 28.02.2006 IT BS20060044
(43) Date of publication of application: 30.07.2008
(73) Proprietor: MECC-LAN S.r.l., 25030 Zocco d'Erbusco (BS) (IT)
(72) Inventor: LANCINI, Franco, 1-25030 ADRO (Brescia) (IT)
(74) Representative: Pulieri, Gianluca Antonio
(86) International application number: PCT/IT2007/000133
(87) International publication number: WO 2007/099573

(56) References cited:
- CH-A- 344 200
- DE-C- 363 008
- FR-A- 1 564 920
- FR-A- 2 343 214
- GB-A- 1 162 063
- JP-A- 2001 263 496
- US-A- 1 340 289

## Description

The present invention relates to a nipple for radiator elements.

As known, radiator elements are hollow elements internally crossed by a high temperature fluid, usually water.

Said radiator elements are connected to each other through hollow nipples for allowing the water flow, which are tightened on collars or connecting ends of two radiator elements adjacent to each other.

Hollow cylindrical nipples are known in the art, suitable for allowing the sealed tightening of the radiator elements through screwing. Such nipples are known for example from US-A-1340289, which reveals a nipple according to the preamble of claim 1.

However, the solutions of the prior art are provided with nipples that are heavy and expensive to manufacture and assemble as they require high tightening torques, up to about 20 Kgm, and thus large sizes. Moreover, such nipples do not always ensure the fluid seal over time.

The problem of the present invention is to provide a nipple which should solve the disadvantages mentioned with reference to the prior art.

Such disadvantages and limits are solved by a nipple in accordance with claim 1 and a radiator element in accordance with claim 10.

Further embodiments of the nipple according to the invention are described in the following claims.

Further features and the advantages of the present invention will appear more clearly from the following description of some preferred non-limiting embodiments thereof, wherein:

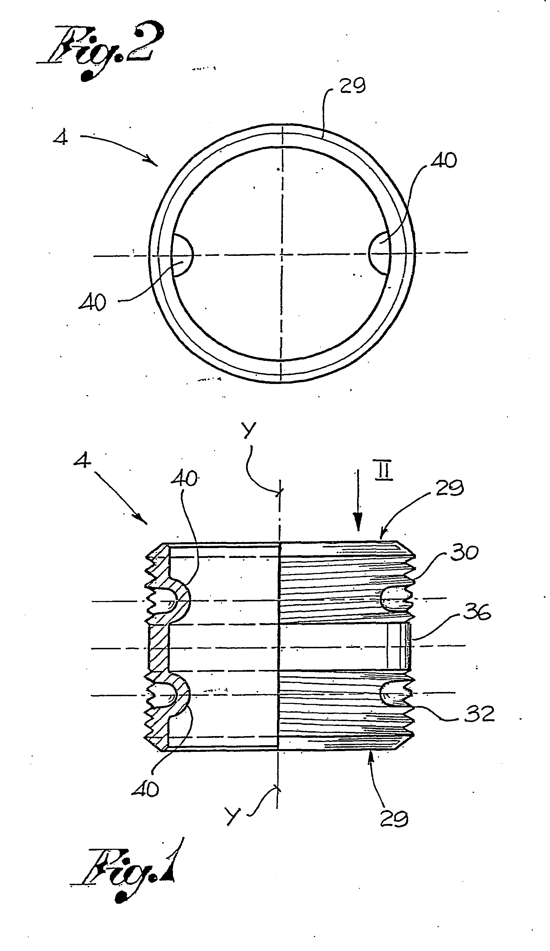

figure 1 shows a side partial section view of a nipple according to an embodiment of the present invention;

figure 2 shows a plan view of the nipple of figure 1, from the side of arrow II of figure 1;

figure 3 shows a section view of radiator elements connected to each other by the nipples of figure 1;

figure 4 shows the enlarged detail IV of figure 1;

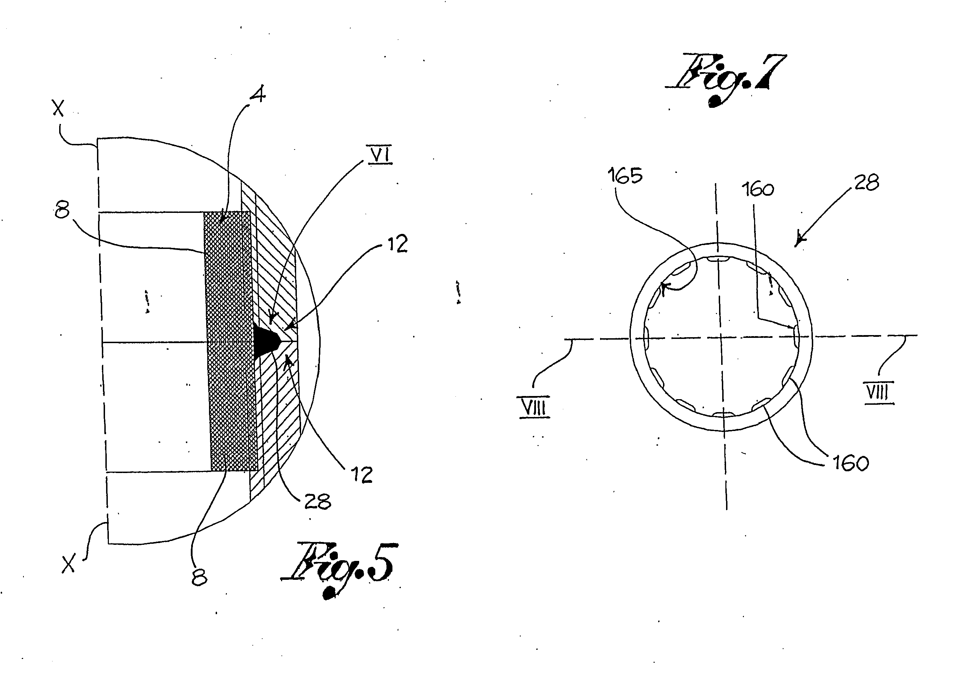

figure 5 shows a section view of radiator elements according to a further embodiment of the present invention, said element being connected to each other by a nipple according to the present invention;

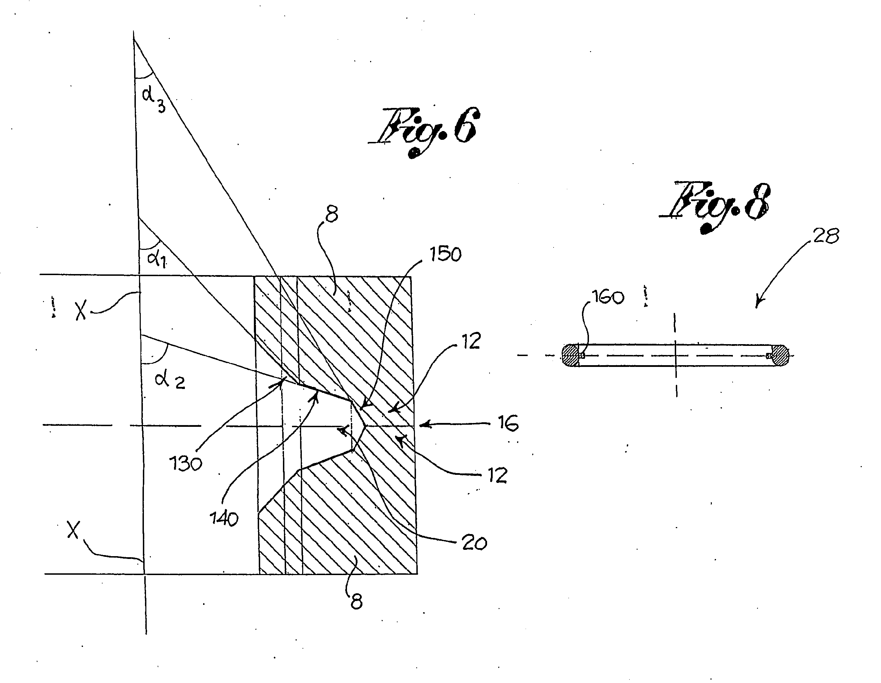

figure 6 shows an enlargement of detail VI of the radiator elements of figure 5;

figure 7 shows a plan view of a detail of figure 5;

figure 8 shows a section view of the detail of figure 7, along line VIII-VIII of figure 7;

figure 9 shows a section view of radiator elements according to a further embodiment of the present invention;

figure 10 shows an enlarged view of particular X of figure 9, wherein a nipple and a relative gasket according to the present invention have been added;

figure 11 shows an enlarged view of particular XI of figure 9;

figure 12 shows an enlarged view of a particular of figure 10.

Common elements or portions of elements in the embodiments described hereinafter will be indicated with the same reference numerals.

With reference to the above figures, reference numeral 4 denotes a nipple for radiator elements 8 suitable for being internally crossed by a fluid such as water.

The radiator elements 8 are usually placed side by side in sets so as to make the radiator complex.

The radiator elements 8 are hollow so as to be crossed by water and comprise tubular connecting ends 12, having an inner threading 14 so as to engage in screwing with nipple 4. Said connecting ends 12 preferably are axial-symmetric relative to a symmetry axis X.

Preferably, the connecting ends 12 end with flat support surfaces 16, so as to be head-connected to each other.

At said support surfaces 16, the connecting end 12 comprises a seat 20, preferably axial-symmetric relative to said symmetry axis X and having a toroidal pattern.

According to an embodiment, seat 20 is obtained by a recessed portion shaped as a circumferential chamfer 24. Such chamfer 24 is preferably inclined at 45 degrees relative to said symmetry axis X.

Chamfer 24 is inclined so that an extension thereof runs into the symmetry axis inwards of the connecting end 12. Chamfer 24 extends so as to end on the support surface 16, without concerning the entire wall thickness 26 of the connecting end 12.

According to a further embodiment of the present invention, at the recessed portion of the connecting ends 12, the radiator elements 8 comprise a first inclined wall 130, a second inclined wall 140 and a third inclined wall 150 adjacent to each other. Said inclined walls are truncated-conical relative to said symmetry axis X. The first inclined wall 130 is adjacent to the associable nipple 4 and is preferably inclined, relative to symmetry axis X, by a first angle a1 comprised between 30 and 60 degrees; preferably, said first angle a1 is equal to 45 degrees.

The second inclined wall 140 is adjacent to the first inclined wall 130, on the side opposite the associable nipple 4. Said second inclined wall 140 is preferably inclined relative to the symmetry axis X, by a second angle a2 comprised between 50 and 80 degrees; preferably, said second angle a2 is equal to 70 degrees.

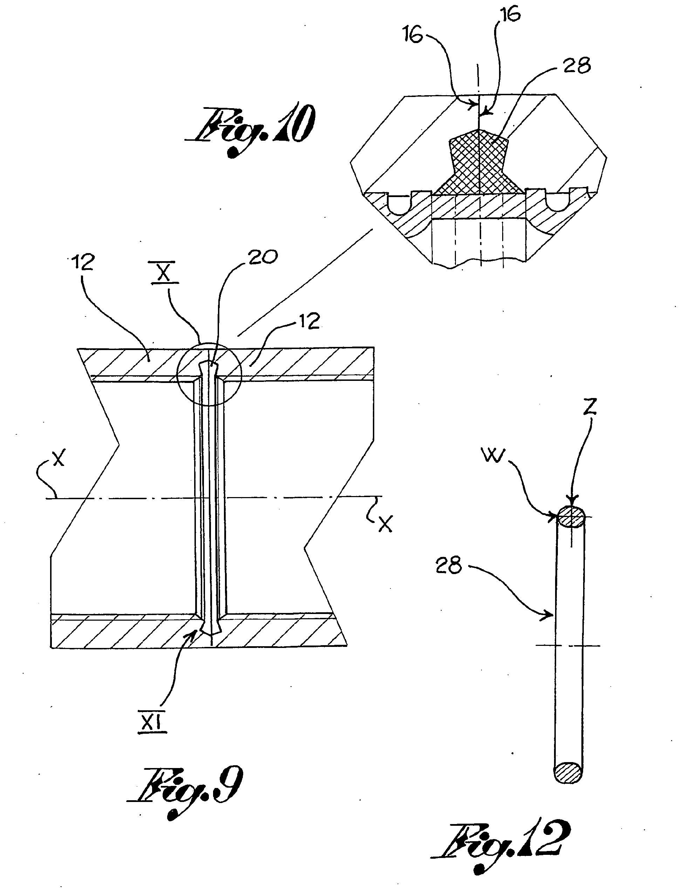

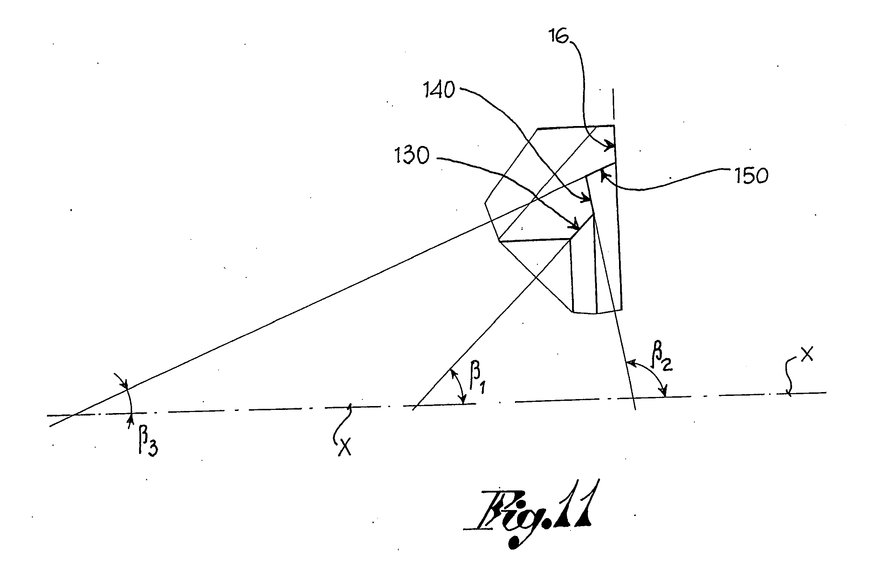

According to another embodiment (figures 9,10,11), the second inclined wall 140 is adjacent to the first inclined wall 130 and it is inclined with respect to the symmetry axis X, by a second angle b2 comprised between 90 and 110 degrees. In other words, the second inclined wall has an inclination opposed to the inclination of the first wall so as to improve the radial blockage of a gasket.

Preferably, said second angle b2 is equal to 100 degrees.

The third inclined wall 150 is adjacent to the second inclined wall 140, on the side opposite the first inclined wall 130. Said third inclined wall 150 is preferably inclined relative to the symmetry axis X, by a third angle a3 comprised between 20 and 45 degrees; preferably, said third angle a3 is equal to 30 degrees.

According to another embodiment (figures 9, 10, 11), the third inclined wall 150 is adjacent to the second inclined wall 130 and it is inclined with respect to the symmetry axis X, by a third angle b3 comprised between 10 and 30 degrees. Preferably, said third angle b3 is equal to 22 degrees.

Two radiator elements 8 adjacent to each other exhibit same connecting ends 12, so as to determine, when the respective connecting ends 12 are placed side by side at the head thereof, a seating space 27 for an associable seal 28. According to an embodiment, seal 28 is an o-ring of polymeric material, for example an 'EPDM' rubber, a 'Viton' or silicone rubber.

According to a possible embodiment, said seal 28 is a ring seal having an elliptic cross-section, having a major axis W and a minor axis Z.

Preferably, said seal 28 has an elliptic cross-section wherein the ratio between said major axis W and said minor axis Z is comprised between 1.10 and 1.40.

Preferably, the ratio between said major axis W and said minor axis Z is equal to 1.21.

Advantageously, in an assembly configuration the major axis W of said cross-section is disposed parallel to said symmetry axis Y.

Advantageously, the seal, thanks to the particular elliptic configuration described, gives the possibility to perform a perfect tight seal with the respective radiator elements.

According to a further embodiment, said seal 28 is of the O-ring type and comprises at least one tooth 160 radially arranged along an inner edge 165 of seal 28, directly facing the relevant nipple 4; preferably, the seal comprises at least two teeth 160 diametrically opposite one another. Said teeth 160 are preferably arranged symmetrically relative to a symmetry axis of the seal which in assembled configuration coincides with said symmetry axis X. Preferably, said teeth are arranged angularly at a pitch along said inner edge; according to a preferred embodiment, said seal comprises at least four teeth and even more preferably it comprises twelve teeth 160.

Nipple 4 as a whole has a cylindrical shape having a symmetry axis Y and suitable for being introduced at least partly into the connecting ends 12 and coaxially therewith, that is, making the symmetry axis Y of nipple 4 coinciding with the symmetry axis X of the connecting end 12.

Nipple 4 extends between opposite axial ends 29 suitable for directly facing the connecting ends 12 of the radiator elements 8.

The nipple 4 exhibits a pair of outer threads 30, 32 arranged on the outer side surface thereof, said threads 30, 32 being suitable for screwing with the inner thread 14 of the connecting ends 12 of radiator elements 8. The outer threads 30, 32 have helix angles equal to one another but with opposite inclination, that is, one helix is right-hand while the other is left-hand.

Nipple 4 comprises a circular and continuous sealing wall 36 along all the circumference thereof, suitable for receiving and influencing said seal 28 associable to nipple 4.

The sealing wall 36 is parallel and coaxial relative to said symmetry axis Y, so as to evenly influence the associable seal 28 along axis Y. The diameter of the bottom of the thread of the outer threads 30,32 is substantially equal to the diameter of said sealing wall 36. Preferably, the diameter of the top of said outer threads 30,32 is substantially equal to the diameter of the sealing wall 36 of an associable nipple 4.

Preferably, the sealing wall 36 has a height, measured parallel to axis Y, not smaller than the height of the seating space 27 determined by two adjacent seats 20.

In this way, it is possible to ensure that after the assembly of the nipple into two radiator elements 8 adjacent to each other, seal 28 is always contained within seats 20 and the seating space 27, inside which it is influenced in compression between the sealing wall 36 and chamfers 24.

Preferably, the sealing wall 36 is arranged symmetrically relative to said axial ends 28 of nipple 4.

Advantageously, the diameter of the sealing wall 36 is substantially equal to the inside diameter of the connecting ends 12 of the associable radiator element 8.

The inside diameter of seal 28 is substantially equal to the diameter of the sealing wall 36, so that after being fitted, the same seal 28 remains positioned on the sealing wall 36.

The sealing wall 36 interrupts the continuity of the outer threads 30, 32.

The outer threads 30, 32 of nipple 4 exhibit a thread bottom diameter substantially equal to the diameter of said sealing wall 36. In this way, on the side opposite the axial ends 28, the outer threads 30, 32 make a pair of containment guides for the associable seal 28 associated to said sealing wall 36.

On the side of each one of axial ends 29, nipple 4 exhibits a pair of indentations 40 arranged diametrically opposite relative to axis Y of nipple 4, so as to protrude inwards of nipple 4, that is, towards the cavity of nipple 4.

Indentations 40 are preferably obtained by punching nipple 4, at portions concerned by the outer threads 30, 32, that is, they are arranged between sealing wall 36 and each one of the axial ends 29 of nipple 4.

Indentations 40 are suitable for being engaged by a special tightening wrench for screwing and tightening nipple 4 between the radiator elements 8.

The assembly of a nipple according to the invention shall now be described.

In particular, nipple 4 is placed at the inlet of two adjacent radiator elements 8 so as to move opposite axial ends 28 of nipple 4 in contact with the relevant inner threads 14 of the connecting ends 12 of the adjacent radiator elements 8.

Seal 28 is first fitted on nipple 4 so as to arrange it on the sealing wall 36.

The tightening wrench is then inserted through the free axial duct of one of the two radiator elements 8, so as to lock the same onto indentations 40 of nipple 4.

By rotating nipple 4, thanks to the fact that the threaded portions 30, 32 have reversed helix angles, nipple 4 concurrently screws on the opposite axial ends 29 so as to move close and tighten to one another the two radiator elements 8.

During the tightening of nipple 4, the radiator elements 8 move in contact with each other, in particular moving the respective support surfaces 16 in abutment.

Chamfers 24 of the connecting ends 12 contact seal 28, which is symmetrically positioned on the sealing wall 36 of nipple 4.

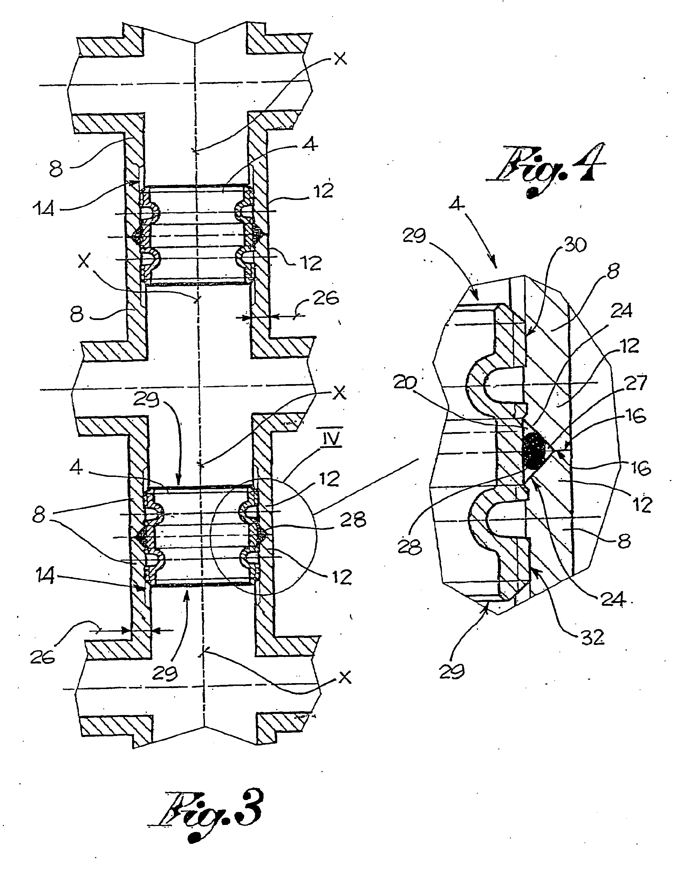

Seal 28 therefore undergoes a crushing by chamfers 24 but also by the sealing wall 36, so as to take on a substantially ellipsoidal section (figure 4), ensuring perfect hydraulic seal.

The continuity of the sealing wall 36 and of chamfers 24 ensures evenness of the seal compression and therefore of the hydraulic seal of the same.

The inclination of chamfer 24 at 45 degrees ensures an even distribution of both radial and axial compression forces on the seal.

The use of the inclined walls at the connecting end of the radiator element contributes to facilitating the assembly and to ensuring the necessary hydraulic seal of the nipple over time.

In particular, the first inclined wall contributes to favouring the insertion of the nipple into the ends of the radiator element.

The second inclined wall substantially contributes to providing the necessary hydraulic seal between the nipple and the radiator element.

The third inclined wall serves as optional discharge for burrs or chips that could result from the screwing of the nipple on the connecting ends of the radiator elements. Such burrs or chips could cause the cracking of the seal.

The use of toroidal seals provided with teeth, on the inner edge thereof, contributes to axially locking the seal into position on the relative sealing wall of the nipple, especially during the insertion of the nipple into the connecting end of the radiator element. Moreover, the presence of teeth causes a state of radial compression of the seal which improves the adhesion thereof on the relative seat and ensures the seal over time. Moreover, the symmetric or pitch arrangement of such teeth always ensures the correct centring of the seal relative to the nipple and to the radiator elements.

As can be appreciated from the above description, the nipple according to the invention allows overcoming the disadvantages of the prior art.

In particular, the described nipple is lighter than the nipples of the prior art and therefore less expensive to make.

In fact, the nipple according to the present invention has a thickness of 2.5 mm whereas the nipples of the prior art have a thickness of 3.3 mm.

The reduction of the thickness also implies an increase of the inner passage section of the nipple that allows a larger water flow section inside the radiator.

Moreover, thanks to the larger inner passage section of the nipple, it is possible to install an electrical resistance into the nipple having a diameter up to 19 mm, in the case of radiator operating with oil, whereas in the radiators of the prior art it is not possible to install resistances with diameters larger than 15 mm. In this way, the heating performance due to such electrical resistances is improved.

The nipple according to the invention requires an especially moderate tightening torque, equal to about 5 Kgm, while ensuring a perfect and constant fluid seal over time.

The tightening operation can be easily carried out using a smaller tightening wrench than the wrenches available on the market and requiring a moderate tightening effort.

The inner bore of the nipple, and therefore the passage section of the nipple are larger than in the nipples available on the market, outer diameter being equal. In fact, the inner diameter of the nipple is larger and the radial overall dimensions of the tightening indentations are smaller.

Moreover, thanks to the reduced thickness it is possible to make the indentations also on nipples having height smaller than 27 mm, for example with nipples having height equal to 26 mm. On the contrary, in the prior art it is not possible to make indentations on nipples having heights smaller than 27 mm without irreparably deforming the nipple itself.

The seal undergoes an even and axial-symmetric crushing by the chamfers and by the sealing wall so as to take on a substantially ellipsoidal section and ensure perfect hydraulic seal, even over time.

In order to meet specific and incidental needs, a man skilled in the art may make several changes and variations to the nipples described above, all falling within the scope of the invention as defined in the following claims.

## Claims

1. A nipple (4) for radiator elements (8), having a symmetry axis (Y), comprising
a pair of outer threads (30, 32) arranged on opposite axial ends (29) of the nipple (4) for allowing the screwing of the nipple (4) on connecting ends (12) of the radiator elements (8),
a sealing wall (36) suitable for cooperating with an associable seal (28), arranged between the sealing wall (36) and the connecting ends (12) of the radiator elements (8) **characterised in that** said sealing wall (36) is parallel and coaxial relative to said symmetry axis (Y), so as to evenly influence the associable seal (28) along axis (Y), and the diameter of the bottom of the outer threads (30,32) is substantially equal to the diameter of said sealing wall (36),
the outer threads (30, 32) make a pair of containment guides for an associable seal (28) associated to said sealing wall (36),
wherein the nipple (4), on the side of each one of axial ends (29) comprises a pair of indentations (40) protruding inwards of the nipple (4), said indentations (40) being suitable for being engaged by a special tightening wrench for screwing and tightening the nipple (4) between the radiator elements (8),
said indentations (40) are arranged at said outer threads (30, 32) of the nipple (4), between the sealing wall (36) and each one of the axial ends (29) of the nipple (4).

2. A nipple (4) according to claim 1, wherein the outer threads (30, 32) comprise helix angles equal to one another but with opposite inclination.

3. A nipple (4) according to claim 1, wherein said indentations (40) are arranged diametrically opposite relative to the axis (Y), so as to protrude inwards of the nipple (4).

4. A nipple (4) according to claim 1 or 3, wherein said indentations (40) are obtained by punching the nipple (4).

5. A nipple (4) according to any one of the previous claims, wherein said seal (28) is of the O-ring type.

6. A nipple (4) according to any one of claims 1 to 5, wherein said seal (28) is a ring seal having an elliptic cross-section, having a major axis (W) and a minor axis (Z).

7. A nipple (4) according to claim 6, wherein said seal (28) has an elliptic cross-section wherein the ratio between said major axis (W) and said minor axis (Z) is comprised between 1.10 and 1.40.

8. A nipple (4) according to claim 7, wherein the ratio between said major axis (W) and said minor axis (Z) is equal to 1.21.

9. A nipple (4) according to any one of claims 6 to 8, wherein, in an assembly configuration, the major axis (W) of said cross-section is disposed parallel to said symmetry axis (Y).

10. A radiator element (8) comprising a nipple (4) according to any one of the previous claims, wherein said seal (28) is of the O-ring type and comprises at least one tooth (160) radially arranged along an inner edge (165) of the seal (28), directly facing the nipple itself.

11. A radiator element (8) according to claim 10, wherein said seal (28) comprises at least two teeth (160) diametrically opposite one another.

12. A radiator element (8) according to claim 10 or 11, wherein said teeth (160) are arranged angularly at a pitch along said inner edge (165).

13. A radiator element according to any one of claims 10 to 12, wherein said seal (28) comprises at least four teeth (160).

14. A radiator element (8) according to claim 13, wherein said seal (28) comprises twelve teeth (164).

15. A set of radiator elements comprising at least one nipple according to any one of claims 1 to 14.

## Patentansprüche

1. Ein Nippel (4) für Heizungselemente (8), der eine Symmetrieachse (Y) besitzt, aufweisend:
ein Paar von Außengewinden (30, 32), die auf gegenüberliegenden axialen Enden (29) des Nippels (4) angeordnet sind, um das Schrauben des Nippels (4) auf Verbindungsenden (12) der Heizungselemente (8) zu ermöglichen;
eine Dichtungswand (36), die geeignet ist, um mit einer zugehörigen Dichtung (28) zusammenzuwirken, die zwischen der Dichtungswand (36) und den Verbindungsenden (12) der Heizungselemente (8) angeordnet ist,
**dadurch gekennzeichnet, dass**
die Dichtungswand (36) bzgl. der Symmetrieachse (Y) parallel und koaxial ist, um die zugehörige Dichtung (28) entlang der Achse (Y) gleichmäßig zu beeinflussen, und
der Durchmesser des Bodens der Außengewinde (30, 32) im Wesentlichen gleich zum Durchmesser der Dichtungswand (36) ist, so dass die Außengewinde (30, 32) ein Paar von Kapselungs-Führungen (containment guides) für die zugehörige Dichtung (28), welche zur Dichtungswand (36) gehört, darstellen,
wobei der Nippel (4) auf der Seite von jedem der axialen Enden (29) ein Paar von Einschnitten (40) umfasst, die in den Nippel (4) hineinragen, wobei die Einschnitte (40) geeignet sind, um von einem speziellen Spannschlüssel zum Schrauben und Spannen des Nippels (4) zwischen den Heizungselementen (8) erfasst zu werden,
wobei die Einschnitte (40) an den Außengewinden (30, 32) des Nippels (4) zwischen der Dichtungswand (36) und jedem der axialen Enden (29) des Nippels (4) angeordnet sind.

2. Nippel (4) gemäß Patentanspruch 1, wobei die Außengewinde (30, 32) Steigungswinkel aufweisen, die gleich sind, aber eine entgegengesetzte Neigung besitzen.

3. Nippel (4) gemäß Patentanspruch 1, wobei die Einschnitte (40) relativ zu der Achse (Y) diametral gegenüberliegend angeordnet sind, um in den Nippel (4) hinein zu ragen.

4. Nippel (4) gemäß Patentanspruch 1 oder 3, wobei die Einschnitte (40) durch Stanzen des Nippels (4) erhalten werden.

5. Nippel (4) gemäß irgendeinem der vorangegangenen Patentansprüche, wobei die Dichtung (28) ein O-Ring ist.

6. Nippel (4) gemäß irgendeinem der Patentansprüche 1 bis 5, wobei die Dichtung (28) eine Ringdichtung ist, die einen elliptischen Querschnitt hat, welcher eine Hauptachse (W) und eine Nebenachse (Z) aufweist.

7. Nippel (4) gemäß Patentanspruch 6, wobei die Dichtung (28) einen elliptischen Querschnitt hat, wobei das Verhältnis zwischen der Hauptachse (W) und der Nebenachse (Z) zwischen 1,10 und 1,40 liegt.

8. Nippel (4) gemäß Patenanspruch 7, wobei das Verhältnis zwischen der Hauptachse (W) und der Nebenachse (Z) gleich 1,21 ist.

9. Nippel (4) gemäß irgendeinem der Patenansprüche 6 bis 8, wobei im montierten Zustand die Hauptachse (W) des Querschnitts parallel zur Symmetrieachse (Y) angeordnet ist.

10. Ein Heizungselement (8), umfassend einen Nippel (4) gemäß irgendeinem der vorangegangenen Patentansprüche, wobei die Dichtung (28) ein O-Ring ist und mindestens einen Zahn (160) aufweist, der entlang einer inneren Flanke (165) der Dichtung (28) radial angeordnet ist und direkt gegenüber dem Nippel selbst liegt.

11. Heizungselement (8) gemäß Patentanspruch 10, wobei die Dichtung (28) mindestens zwei Zähne (160) umfasst, die einander diametral gegenüber liegen.

12. Heizungselement (8) gemäß Patentanspruch 10 oder 11, wobei die Zähne (160) winkelig in einem Abstand entlang der inneren Flanke (165) angeordnet sind.

13. Heizungselement (8) gemäß irgendeinem der Patentansprüche 10 bis 12, wobei die Dichtung (28) mindestens vier Zähne (160) umfasst.

14. Heizungselement (8) gemäß Patentanspruch 13, wobei die Dichtung (28) zwölf Zähne (160) umfasst.

15. Ein Satz von Heizungselementen, die mindestens einen Nippel gemäß irgendeinem der Patentansprüche 1 - 14 umfassen.

## Revendications

1. Raccord fileté (4) pour éléments de radiateur (8), ayant un axe de symétrie (Y), comprenant :
une paire de filetages extérieurs (30, 32) disposés sur les extrémités axiales opposées (29) du raccord fileté (4) pour permettre le vissage du raccord fileté (4) sur des extrémités de connexion (12) des éléments de radiateur (8),
une paroi d'étanchéité (36) adaptée pour coopérer avec un joint associé (28), placé entre la paroi d'étanchéité (36) et les extrémités de connexion (12) des éléments de radiateur (8), **caractérisé en ce que** ladite paroi d'étanchéité (36) est parallèle et coaxiale par rapport audit axe de symétrie (Y), afin d'avoir une influence uniforme sur le joint associé (28) le long de l'axe (Y), et le diamètre du fond des filets extérieurs (30, 32) est sensiblement égal au diamètre de ladite paroi d'étanchéité (36),
les filets extérieurs (30, 32) forment une paire de guides de retenue pour un joint associé (28) qui est associé à ladite paroi d'étanchéité (36),
dans lequel le raccord fileté (4), du côté de chacune des extrémités axiales (29), comprend une paire d'encoches (40) faisant saillie vers l'intérieur du raccord fileté (4), lesdites encoches (40) étant adaptées pour être mises en prise par une clé de serrage spéciale pour visser et serrer le raccord fileté (4) entre les éléments de radiateur (8),
lesdites encoches (40) sont formées au niveau desdits filets extérieurs (30, 32) du raccord fileté (4), entre la paroi d'étanchéité (36) et chacune des extrémités axiales (29) du raccord fileté (4).

2. Raccord fileté (4) selon la revendication 1, dans lequel les filets extérieurs (30, 32) comprennent des angles de filet égaux entre eux mais avec une inclinaison opposée.

3. Raccord fileté (4) selon la revendication 1, dans lequel lesdites encoches (40) sont diamétralement opposées par rapport à l'axe (Y), de manière à faire saillie vers l'intérieur du raccord fileté (4).

4. Raccord fileté (4) selon la revendication 1 ou 3, dans lequel lesdites encoches (40) sont obtenues en poinçonnant le raccord fileté (4).

5. Raccord fileté (4) selon l'une quelconque des revendications précédentes, dans lequel ledit joint (28) est du type joint torique.

6. Raccord fileté (4) selon l'une quelconque des revendications 1 à 5, dans lequel ledit joint (28) est un joint annulaire de section elliptique, ayant un axe principal (W) et un axe secondaire (Z).

7. Raccord fileté (4) selon la revendication 6, dans lequel ledit joint (28) est de section elliptique, et dans lequel le rapport entre ledit axe principal (W) et ledit axe secondaire (Z) est compris entre 1,10 et 1,40.

8. Raccord fileté (4) selon la revendication 7, dans lequel le rapport entre ledit axe principal (W) et ledit axe secondaire (Z) est égal à 1,21.

9. Raccord fileté (4) selon l'une quelconque des revendications 6 à 8, dans lequel, dans une configuration d'assemblage, l'axe principal (W) de ladite section est parallèle audit axe de symétrie (Y).

10. Elément de radiateur (8) comprenant un raccord fileté (4) selon l'une quelconque des revendications précédentes, dans lequel ledit joint (28) est du type joint torique et comprend au moins une dent (160) disposée radialement le long d'un bord intérieur (165) du joint 28), directement en face du raccord lui-même.

11. Elément de radiateur (8) selon la revendication 10, dans lequel ledit joint (28) comprend au moins deux dents (160) diamétralement opposées l'une à l'autre.

12. Elément de radiateur (8) selon la revendication 10 ou 11, dans lequel lesdites dents (160) sont disposées de façon angulaire avec un pas le long dudit bord intérieur (165).

13. Elément de radiateur (8) selon l'une quelconque des revendications 10 à 12, dans lequel ledit joint (28) comprend au moins quatre dents (160).

14. Elément de radiateur (8) selon la revendication 13, dans lequel ledit joint (28) comprend douze dents (160).

15. Ensemble d'éléments de radiateur comprenant au moins un raccord fileté selon l'une quelconque des revendications 1 à 14.
